# EUROPEAN PATENT SPECIFICATION

(11) **EP 4 239 286 B1**
(45) Date of publication and mention of the grant of the patent: **09.07.2025**
(21) Application number: 23159404.5
(22) Date of filing: 01.03.2023
(51) Int. Cl.: G01C 15/00, G01C 3/08

(54) **SURVEYING INSTRUMENT**
VERMESSUNGSINSTRUMENT
INSTRUMENT D'ARPENTAGE

(30) Priority: 02.03.2022 JP 2022031615
(43) Date of publication of application: 06.09.2023
(73) Proprietor: Topcon Corporation, Tokyo 174-8580 (JP)
(72) Inventor: YUASA, Taichi, Tokyo-to, 174-8580 (JP)
(74) Representative: Louis Pöhlau Lohrentz

(56) References cited:
- EP-A1- 3 489 714
- DE-A1- 10 151 701

## Description

### BACKGROUND OF THE INVENTION

The present invention relates to a surveying instrument which can acquire three-dimensional coordinates of an object.

A surveying instrument such as a laser scanner or a total station has an electronic distance meter which detects a distance to an object which is to be measured by the prism distance measurement using a reflecting prism having the retro-reflective property as the object or the non-prism distance measurement using no reflecting prism.

In a conventional surveying instrument, to coincide an optical axis of a distance measuring light projected toward the object with a reflected distance measuring light reflected from the object, the optical axis of the distance measuring light or the optical axis of the reflected distance measuring light is deflected by a mirror or the like. Further, to miniaturize an optical system of the surveying instrument, the optical axis of the distance measuring light or the optical axis of the reflected distance measuring light may be deflected more than once.

Some surveying instruments are capable of both the prism distance measurement and the non-prism distance measurement. On the other hand, since the non-prism distance measurement may have a low reflectance of an object, it is necessary to use a distance measuring light with a large light amount in order to obtain a reflected distance measuring light with a sufficient light amount. However, in a case where the prism distance measurement is performed using the distance measuring light with a large light amount, a light amount of the reflected distance measuring light may become excessive, and a light receiving system may be saturated, which makes it impossible to measure.

State of the art surveying instruments are disclosed in EP 3 489 714 A1 and DE 101 51 701 A1.

### SUMMARY OF INVENTION

It is an object of the present invention to provide a surveying instrument which is capable of adjusting a light amount of a distance measuring light.

To attain the object as described above, a surveying instrument according to the present invention is defined in claim 1.

Further, a preferred embodiment is defined in claim 2.

### BRIEF DESCRIPTION OF DRAWINGS

FIG.1 is a front sectional drawing to show a surveying instrument according to a first embodiment of the present invention.
FIG.2A is a block diagram to show a distance measuring unit according to the first embodiment of the present invention, and FIG.2B is a side elevation to show a reflecting prism.
FIG.3 is a block diagram to show the distance measuring unit according to the first embodiment of the present invention.
FIG.4 is a block diagram to show a distance measuring unit according to a second embodiment of the present invention.
FIG.5 is a block diagram to show a distance measuring unit according to a third embodiment of the present invention.
FIG.6 is a block diagram to show a distance measuring unit according to a fourth embodiment of the present invention.
FIG.7 is a block diagram to show a distance measuring unit according to a fifth embodiment of the present invention.
FIG.8 is a block diagram to show a distance measuring unit according to a sixth embodiment of the present invention.

### DETAILED DESCRIPTION OF THE PREFERRED EMBODIMENTS

A description will be given below on embodiments of the present invention by referring to the attached drawings.

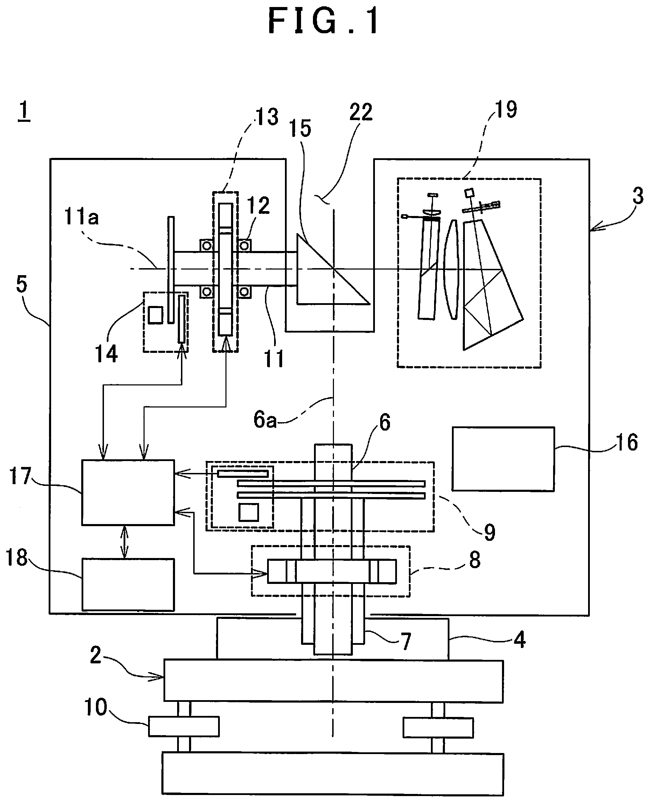

First, by referring to FIG.1, a description will be given on a surveying instrument according to a first embodiment of the present invention.

A surveying instrument 1 is, for instance, a laser scanner. The surveying instrument 1 is constituted of a leveling module 2 mounted on a tripod (not shown) and a surveying instrument main body 3 mounted on the leveling module 2.

The leveling module 2 has leveling screws 10, and the surveying instrument main body 3 is leveled up by the leveling screws 10.

The surveying instrument main body 3 includes a fixing unit 4, a frame unit 5, a horizontal rotation shaft 6, a horizontal rotation bearing 7, a horizontal rotation motor 8 as a horizontal rotation driving module, a horizontal angle encoder 9 as a horizontal angle detector, a vertical rotation shaft 11, a vertical rotation bearing 12, a vertical rotation motor 13 as a vertical rotation driving module, a vertical angle encoder 14 as a vertical angle detector, a scanning mirror 15 which is a vertical rotation module, an operation panel 16 which serves as both an operation module and a display module, an arithmetic control module 17, a storage module 18, a distance measuring unit 19 and others. It is to be noted that, as the arithmetic control module 17, a CPU specialized for this instrument or a general-purpose CPU is used.

The horizontal rotation bearing 7 is fixed to the fixing unit 4. The horizontal rotation shaft 6 has a vertical axis 6a, and the horizontal rotation shaft 6 is rotatably supported by the horizontal rotation bearing 7. Further, the frame unit 5 is supported by the horizontal rotation shaft 6, and the frame unit 5 integrally rotates with the horizontal rotation shaft 6 in the horizontal direction.

The horizontal rotation motor 8 is provided between the horizontal rotation bearing 7 and the frame unit 5, and the horizontal rotation motor 8 is controlled by the arithmetic control module 17. The arithmetic control module 17 rotates the frame unit 5 around the axis 6a by the horizontal rotation motor 8.

A relative rotation angle of the frame unit 5 with respect to the fixing unit 4 is detected by the horizontal angle encoder 9. A detection signal from the horizontal angle encoder 9 is input to the arithmetic control module 17, and the horizontal angle data is calculated by the arithmetic control module 17. The arithmetic control module 17 performs the feedback control of the horizontal rotation motor 8 based on the horizontal angle data.

Further, in the frame unit 5, the vertical rotation shaft 11 having a horizontal axis 11a is provided. The vertical rotation shaft 11 can rotate via the vertical rotation bearing 12. It is to be noted that an intersection of the axis 6a and the axis 11a is a projecting position for a distance measuring light, and the intersection is an origin of a coordinate system of the surveying instrument main body 3.

A recess portion 22 is formed in the frame unit 5. One end portion of the vertical rotation shaft 11 extends to the inside of the recess portion 22. Further, the scanning mirror 15 is fixed to the one end portion, and the scanning mirror 15 is accommodated in the recess portion 22. Further, the vertical angle encoder 14 is provided at the other end portion of the vertical rotation shaft 11.

The vertical rotation motor 13 is provided on the vertical rotation shaft 11, and the vertical rotation motor 13 is controlled by the arithmetic control module 17. The arithmetic control module 17 rotates the vertical rotation shaft 11 by the vertical rotation motor 13. Further, and the scanning mirror 15 is rotated around the axis 11a.

A rotation angle of the scanning mirror 15 is detected by the vertical angle encoder 14, and a detection signal is input to the arithmetic control module 17. The arithmetic control module 17 calculates the vertical angle data of the scanning mirror 15 based on the detection signal, and performs the feedback control of the vertical rotation motor 13 based on the vertical angle data.

Further, the horizontal angle data and the vertical angle data calculated by the arithmetic control module 17, and the measurement results are stored in the storage module 18. As the storage module 18, various types of storage devices are used. These storage devices include: an HDD as a magnetic storage device, a CD or DVD as an optical storage device, a memory card and a USB memory as a semiconductor storage device, and other storage devices. The storage module 18 may be attachable to and detachable from the frame unit 5. Alternatively, the storage module 18 may enable transmitting the data to an external storage device or an external data processing device via a not shown communicating means.

In the storage module 18, various types of programs are used. These programs include: a sequence program for controlling a distance measuring operation, a calculation program for calculating a distance by the distance measuring operation, a calculation program for calculating an angle based on the horizontal angle data and the vertical angle data, a calculation program for calculating three-dimensional coordinates of a desired measuring point based on a distance and an angle, and other programs. Further, when the various types of programs stored in the storage module 18 are executed by the arithmetic control module 17, various types of processing are performed.

The operation panel 16 is, for instance, a touch panel. The operation panel 16 serves as both an operation module which performs, for instance, changing distance measurement instructions or measurement conditions such as a measuring point interval and a display module which displays distance measurement results, images and the like.

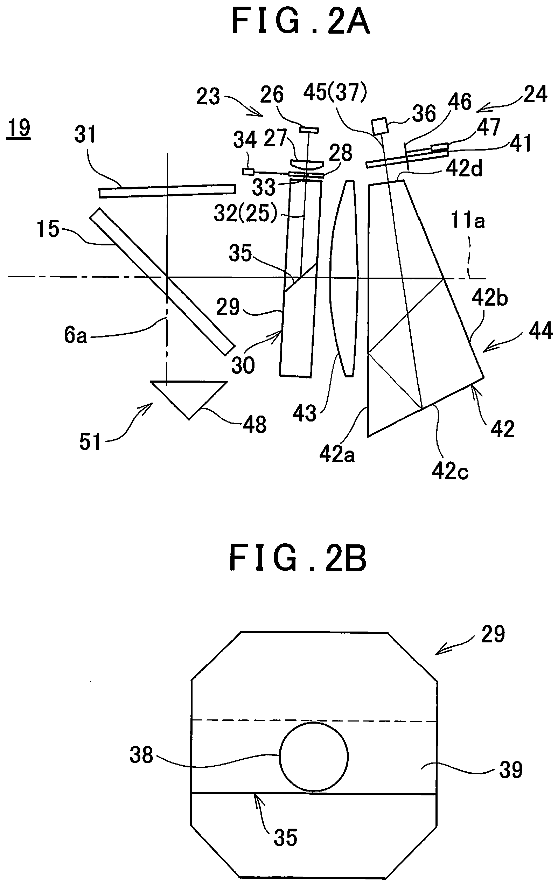

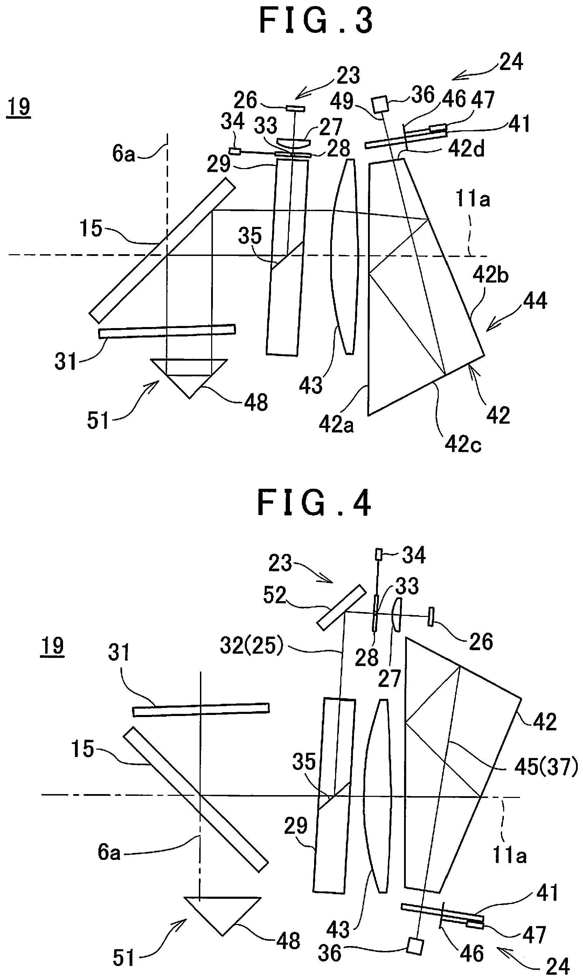

Next, a description will be given on the distance measuring unit 19 by referring to FIG.2A, FIG.2B and FIG.3.

The distance measuring unit 19 has a distance measuring light projecting module 23 and a distance measuring light receiving module 24. It is to be noted that, the distance measuring light projecting module 23 and the distance measuring light receiving module 24 configure a distance measuring unit.

The distance measuring light projecting module 23 has a distance measuring optical axis 25. Further, the distance measuring light projecting module 23 has a light emitter 26 such as a laser diode (LD), a collimator lens 27, a pinhole plate 28 as a spread angle adjusting member, and a reflecting prism 29 provided on the distance measuring optical axis 25 sequentially from a light emission side. Further, the scanning mirror 15 is provided on a reflected optical axis of the reflecting prism 29. Further, a window unit 31 which is formed of a transparent material and integrally rotates with the scanning mirror 15 is provided on a reflected optical axis of the scanning mirror 15. It is to be noted that the window unit 31 is provided in FIG.2, but the window unit 31 may be omitted.

It is to be noted that the collimator lens 27, the pinhole plate 28, the reflecting prism 29, and the like configure a light projecting optical system 30. Further, in the present embodiment, the distance measuring optical axis 25 and the distance measuring optical axis 25 reflected by the reflecting prism 29 are generically referred to as the distance measuring optical axis 25.

The light emitter 26 is configured to project a laser beam having a predetermined wavelength as a distance measuring light 32, and the collimator lens 27 is configured to turn the distance measuring light 32 to a parallel light flux.

The pinhole plate 28 is, for instance, a black plate material having a pinhole 33 drilled in a central portion. The pinhole plate 28 is insertable into or removable from the distance measuring optical axis 25 via a driving mechanism 34, for instance, a solenoid. In a state where the pinhole plate 28 is being inserted onto the distance measuring optical axis 25, the center of the pinhole 33 is placed on the distance measuring optical axis 25. It is to be noted that a diameter of the pinhole 33 is appropriately set in the range of ϕ = 0.5 mm to 2 mm, for instance.

In case of performing the prism measurement, which the object is a prism or the like having the retroreflective property, the pinhole plate 28 is inserted onto the distance measuring optical axis 25. Further, in case of performing the non-prism measurement, which the object is other than the prism, the pinhole plate 28 is removed from the distance measuring optical axis 25.

When the pinhole plate 28 has been inserted onto the distance measuring optical axis 25, regarding to the distance measuring light 32 which has entered the pinhole plate 28, only the distance measuring light 32 which has entered the pinhole 33 passes through the pinhole plate 28, and the distance measuring light 32 which has entered other than the pinhole 33 is blocked by the pinhole plate 28. Therefore, the distance measuring light 32 is decreased the light amount by the pinhole plate 28 and projected from the pinhole 33 while diverging (diameter-expanding) at a predetermined spread angle by a diffraction effect. It is to be noted that a diameter of the pinhole 33 is set in such a manner that the spread angle ϕ which is expanded by the diffraction is, for instance, 6 minutes. Preferably, the diameter of the pinhole 33 is appropriately set in the range of 2 to 20 minutes.

Further, in the present embodiment, the pinhole plate 28 is provided between the collimator lens 27 and the reflecting prism 29. On the other hand, the pinhole plate 28 may be provided between the light emitter 26 and the collimator lens 27.

The reflecting prism 29 is formed by joining two trapezoidal prisms. The reflecting prism 29 has a rectangular parallelepiped shape with the two prisms being joined. An incidence surface of the distance measuring light 32 is orthogonal to the distance measuring optical axis 25, and a joined surface 35 of the reflecting prism 29 tilts at a predetermined angle with respect to the distance measuring optical axis 25. Further, a projecting surface of the reflecting prism 29 is configured in such a manner that the distance measuring optical axis 25 reflected on the joined surface 35 enters while slightly tilting at, for instance, approximately 2.5°. That is, the distance measuring light 32 enters the reflecting prism 29 at a slight tilt with respect to the projecting surface of the reflecting prism 29. Therefore, the projecting surface of the reflecting prism 29 prevents the distance measuring light 32 internally-reflected by the projecting surface from being received by a photodetector 36 (to be described later). It is to be noted that a tilt angle of the joined surface 35 is an angle causing the deflection (the reflection) of the distance measuring optical axis 25 in such a manner that the distance measuring optical axis 25 coincides with a light receiving optical axis 37 (to be described later) and the axis 11a. Alternatively, the tilt angle of the joined surface 35 may be set to 45°, and the distance measuring light 32 may enter the reflecting prism 29 with the distance measuring optical axis 25 being tilt with respect to the incidence surface of the reflecting prism 29 in such a manner that the distance measuring optical axis 25 coincides with the light receiving optical axis 37 and the axis 11a.

A beam splitter film 38 is formed at a central portion of the joined surface 35, and an antireflective film 39 is formed on entire front surface and back surface of the reflecting prism 29. The beam splitter film 38 has an elliptic shape in conformity with a light flux of the distance measuring light 32. Further, a size of the beam splitter film 38 is equivalent to or slightly larger than a light flux diameter of the distance measuring light 32 diverged by the pinhole 33. Further, for instance, the beam splitter film 38 has optical characteristics to reflect a light which is approximately 80% and transmit through a light which is approximately 20%.

It is to be noted that a ratio of a reflectance and a transmittance in the beam splitter film 38 is appropriately set in correspondence with applications or a distance to the object. For instance, in a case where the distance to the object is close, it is desirable to select the reflectance and the transmittance of the beam splitter film 38 from the range of the 50% to 70% reflectance and the 30% to 50% transmittance. Further, in a case where the distance to the object is far, it is desirable to select the reflectance and the transmittance of the beam splitter film 38 from the range of the 70% to 90% reflectance and the 10% to 30% transmittance.

The distance measuring light receiving module 24 has the light receiving optical axis 37. Further, the distance measuring light receiving module 24 has the photodetector 36, a light amount adjusting plate 41, and a receiving prism 42 provided on the light receiving optical axis 37 sequentially from a light reception side, and has a light receiving lens 43 with a predetermined NA (Numerical Aperture) provided on the light receiving optical axis 37 reflected by the receiving prism 42.

It is to be noted that the light amount adjusting plate 41, the receiving prism 42, the light receiving lens 43, the reflecting prism 29, and the like configure a light receiving optical system 44. Further, in the present embodiment, the light receiving optical axis 37 and the light receiving optical axis 37 reflected by the receiving prism 42 are generically referred to as the light receiving optical axis 37.

The distance measuring unit 19 is controlled by the arithmetic control module 17. In a case where the pinhole plate 28 is not present on the distance measuring optical axis 25, the pulsed distance measuring light 32 is projected onto the distance measuring optical axis 25 from the light emitter 26, then the distance measuring light 32 is turned to a parallel light flux by the collimator lens 27. Further, in a case where the pinhole plate 28 is present on the distance measuring optical axis 25, since the pinhole plate 28 blocks lights other than the distance measuring light 32 which passes through the pinhole 33, a total light amount of the distance measuring light 32 is reduced, Furthermore, the distance measuring light 32 is projected at a predetermined spread angle due to the diffraction effect when it passes through the pinhole 33.

The distance measuring light 32 which has passed through the pinhole 33 enters an incidence surface of the reflecting prism 29 at a right angle, and the distance measuring light 32 is transmitted through the reflecting prism 29 and reflected on the joined surface 35 (the beam splitter film 38) in such a manner that the distance measuring optical axis 25 becomes coaxial with the light receiving optical axis 37 and the axis 11a. The distance measuring light 32 projected from the reflecting prism 29 is deflected at a right angle by the scanning mirror 15 and irradiated to the object via the window unit 31. By rotating the scanning mirror 15 around the axis 11a, the distance measuring light 32 becomes orthogonal to the axis 11a, and the distance measuring light 32 is rotated (scanned) within a plane including the axis 6a.

It is to be noted that the window unit 31 is tilted at a predetermined angle with respect to the distance measuring optical axis 25 in such a manner that the distance measuring light 32 reflected by the window unit 31 does not enter the photodetector 36.

The distance measuring light 32 reflected by the object (hereinafter a reflected distance measuring light 45) is reflected at a right angle by the scanning mirror 15, and the reflected distance measuring light 45 is received by the photodetector 36 through the light receiving optical system 44. The photodetector 36 is, for instance, an avalanche photodiode (APD) or an equivalent photoelectric conversion element.

The arithmetic control module 17 performs the distance measurement for each pulse of the distance measuring light 32 based on a time lag between a light emission timing of the light emitter 26 and a light reception timing of the photodetector 36 (that is, a round-trip time of a pulsed light) and a light velocity (Time Of Flight). It is to be noted that the operation panel 16 can change the light emission timing of the light emitter 26, that is, a pulse interval.

It is to be noted that an internal reference light optical system (to be described later) is provided in the distance measuring unit 19. By performing the distance measurement based on a time lag between the light reception timing for an internal reference light (to be described later) received from the internal reference light optical system and the reception timing of the reflected distance measuring light 45 and the light velocity, the distance measuring unit 19 enables the further accurate distance measurement.

The frame unit 5 and the scanning mirror 15 are rotated at a constant speed, respectively. A two-dimensional scan by the distance measuring light 32 is performed by the cooperation between the vertical rotation of the scanning mirror 15 and the horizontal rotation of the frame unit 5. Further, the distance measurement data (a slope distance) is acquired by the distance measurement for each pulsed light, by detecting a vertical angle and a horizontal angle for each pulsed light by the vertical angle encoder 14 and the horizontal angle encoder 9, the arithmetic control module 17 enables calculating the vertical angle data and the horizontal angle data. Three-dimensional coordinates of the object and the three-dimensional point cloud data corresponding to the object can be acquired based on the vertical angle data, the horizontal angle data, and the distance measurement data.

Next, a description will be given on the light receiving optical system 44. It is to be noted that, in FIG.2A and FIG.3, only a chief ray (the distance measuring optical axis 25) of the distance measuring light 32 and a chief ray (the light receiving optical axis 37) of the reflected distance measuring light 45 are shown.

The receiving prism 42 is a quadrangular prism having a predetermined refractive index. The receiving prism 42 has a first surface 42a which the reflected distance measuring light 45 transmitted through the light receiving lens 43 enters, a second surface 42b which reflects the reflected distance measuring light 45 transmitted through a plane of the first surface 42a, a third surface 42c which the reflected distance measuring light 45 reflected by the second surface 42b and the first surface 42a enters, and a fourth surface 42d as a transmission surface which the reflected distance measuring light 45 reflected by the third surface 42c is transmitted through. The reflected distance measuring light 45 transmitted through the fourth surface 42d is configured to enter the photodetector 36. It is to be noted that, the third surface 39c reflects the reflected distance measuring light 43 in such a manner that the reflected distance measuring light 43 crosses the reflected distance measuring light 43 entered the first surface 39a.

The light amount adjusting plate 41 is a plastic disk, for instance. A circular gradation film is formed as a light amount adjusting surface on a surface of the light amount adjusting plate 41, and a part of the gradation film is arranged to be orthogonal to the light receiving optical axis 37. Further, the light amount adjusting plate 41 is rotatable around a rotation shaft 46 by a motor 47. An incidence position of the reflected distance measuring light 45 with respect to the light amount adjusting plate 41 (the light amount adjusting surface) is configured to change based on the rotation of the light amount adjusting plate 41.

The gradation film is configured in such a manner that a transmittance gradually increases (or decreases) in the range of θ = 0° to 360°. Therefore, by driving the motor 47 and controlling an incidence position of the reflected distance measuring light 45 with respect to the light amount adjusting plate 41 (the light amount adjusting surface), the arithmetic control module 17 is capable of changing the transmittance of the reflected distance measuring light 45 in the range of 0.0001% to 100%, for instance. The transmittance of the light amount adjusting plate 41 is appropriately set in correspondence with a type of the object or a distance to the object.

Further, a reference prism 48 having the retroreflective property is provided below the scanning mirror 15. In a process of the rotational irradiation of the distance measuring light 32 via the scanning mirror 15, a part of the distance measuring light 32 enters the reference prism 48. The distance measuring light 32 retro-reflected by the reference prism 48 is configured to enter the light receiving optical system 44 via the scanning mirror 15, and to be received by the photodetector 36.

Here, an optical path length from the light emitter 26 to the reference prism 48 and an optical path length from the reference prism 48 to the photodetector 36 are known. Therefore, the distance measuring light 32 reflected by the reference prism 48 can be used as internal reference light 49. The scanning mirror 15 and the reference prism 48 configured an internal reference light optical system 51.

Next, a description will be given on a case where the measurement is performed by the surveying instrument 1 having the distance measuring unit 19. Various types of operations of the distance measuring unit 19 are performed when the arithmetic control module 17 executes various types of programs stored in the storage module 18. It is to be noted that a case where the prism measurement is performed will be described below.

The distance measuring light 32 emitted from the light emitter 26 is turned to a parallel light flux by the collimator lens 27, and then enters the reflecting prism 29 at a right angle while being dimmed and spreading at a predetermined spread angle via the pinhole 33 of the pinhole plate 28. Alternatively, the distance measuring light 32 emitted from the light emitter 26 directly enters the reflecting prism 29 at a right angle via the collimator lens 28.

The distance measuring light 32 which has entered the reflecting prism 29 is transmitted through the reflecting prism 29, and deflected (reflected) such that the distance measuring optical axis 25 becomes coaxial with the light receiving optical axis 37 and the axis 11a by the beam splitter film 38 of the joined surface 35. At this time, since the beam splitter film 38 has an elliptic shape with a size equivalent to or slightly larger than a light flux diameter of the distance measuring light 32, the entire distance measuring light 32 enters the beam splitter film 38. Further, since a projecting surface of the reflecting prism 29 tilts with respect to the distance measuring optical axis 25, the distance measuring light 32 internally reflected on the projecting surface is not received by the photodetector 36.

The distance measuring light 32 reflected on the beam splitter film 38 is transmitted at a slight tilt with respect to the projecting surface of the reflecting prism 29 and irradiated to the object, for instance, a prism having the retroreflective property via the scanning mirror 15.

The reflected distance measuring light 45 reflected by the prism is reflected at a right angle by the scanning mirror 15, transmitted through the reflecting prism 29, and enters the light receiving optical system 44. Here, a light of a center part of the reflected distance measuring light 45 enters the beam splitter film 38 on the joined surface 35. Further, the reflected distance measuring light 45 is totally transmitted through portions other than the beam splitter film 38 via the antireflective film 39. On the other hand, a part of the reflected distance measuring light 45 which has entered is transmitted through a portion where the beam splitter film 38 is provided. In the present embodiment, since the beam splitter film 38 has a transmittance of 20%, 20% of the reflected distance measuring light 45 which has entered the beam splitter film 38 is transmitted through the beam splitter film 38.

The reflected distance measuring light 45 which has been transmitted through the reflecting prism 29 and has entered the light receiving optical system 44 is refracted in a process of being transmitted through the light receiving lens 43 and the first surface 42a. The reflected distance measuring light 45 is internally-reflected sequentially by the second surface 42b and the first surface 42a in the receiving prism 42, and enters the third surface 42c. Further, the reflected distance measuring light 45 is reflected on the third surface 42c toward the fourth surface 42d, that is, in a direction crossing the reflected distance measuring light 45 which has entered from the first surface 42a. The reflected distance measuring light 45 transmitted through the fourth surface 42d is received by the photodetector 36 while being decreased the light amount in a process of being transmitted through the light amount adjusting plate 41.

The arithmetic control module 17 calculates three-dimensional coordinates of the prism based on a distance measurement result of the distance measuring unit 19 and detection results of the horizontal angle encoder 9 and the vertical angle encoder 14.

It is to be noted that the measurement of the prism may be performed by scanning a whole circumference or a periphery of the prism with the distance measuring light 32 and determining a position at which the reflected distance measuring light 45 has been received as a position of the prism.

As described above, in the first embodiment, the pinhole plate 28 insertable and/or removable with respect to the distance measuring optical axis 25 is provided, and the dimming of the distance measuring light 32 and the expansion of the spread angle are enabled via the pinhole 33 of the pinhole plate 28.

Here, regarding to the non-prism distance measurement, the distance measuring light 32 which a large light amount is used in such a manner that a received light amount of the reflected distance measuring light 45 is obtained sufficiently even if a reflectance of the object is low. On the other hand, in a case where the prism measurement is performed using the distance measuring light 32 with a large light amount, a received light amount of the reflected distance measuring light 45 becomes excessive, and the photodetector 36 is saturated.

Therefore, in a case where the prism measurement is performed, by inserting the pinhole plate 28 onto the distance measuring optical axis 25 and decreasing the receiving light amount of the distance measuring light 32, it is possible to prevent the photodetector 36 from being saturated. That is, by inserting or removing of the pinhole plate 28, the arithmetic control module 17 enables changing a light amount and a spread angle of the distance measuring light 32.

Further, when the distance measuring light 32 passes through the pinhole 33, since the distance measuring light 32 diverges at a predetermined spread angle by the diffraction effect, it is possible to easily irradiate the distance measuring light 32 to the prism, and the workability can be improved.

Further, the pinhole 33 is a hole, and the distance measuring light 32 does not refract when the distance measuring light 32 passes through the pinhole 33. Therefore, since the pinhole plate 28 does not have to be precisely arranged in such a manner that the pinhole plate 28 becomes orthogonal to the distance measuring optical axis 25 and a surface of the pinhole plate 28 does not have to be a precise flat surface, a manufacturing cost can be reduced, and the workability can be improved.

Further, in a first embodiment, the reflecting prism 29, which is a combination of two prisms, is used as an optical member configured to coincide the distance measuring optical axis 25 with the light receiving optical axis 37, and the distance measuring light 32 is deflected by the beam splitter film 38 formed on the joined surface 35 of the reflecting prism 29.

Here, a light amount at a central portion of the reflected distance measuring light 45 increases if a distance to the object is short, and a light amount at a peripheral portion of the reflected distance measuring light 45 increases if a distance to the object is long.

Therefore, since a part of the reflected distance measuring light 45 which has entered the beam splitter film 38 is transmitted through the beam splitter film 38 having a predetermined transmittance, it is possible to reduce the vignetting of the reflected distance measuring light 48 due to the beam splitter film 38 and obtain a sufficient received light amount which enables the distance measurement even in the short-distance measurement.

Further, since it is possible to reduce the vignetting of the reflected distance measuring light 45 passing through the beam splitter film 38, a small corner cube or the like is used as the object, and performing the measurement is enabled even if a beam diameter of the reflected distance measuring light 45 is small.

Further, the light amount adjusting plate 41 having a light amount adjusting surface capable of changing a transmittance by the rotation is provided between the receiving prism 42 and the photodetector 36, and the rotation of the light amount adjusting plate 41 enables adjusting a light amount of the reflected distance measuring light 45 received by the photodetector 36.

Therefore, even in a case where the light amount of the reflected distance measuring light 45 is so large that the photodetector 36 is saturated, it is possible to attenuate the light amount of the reflected distance measuring light 45 to an appropriate light amount by the light amount adjusting plate 41.

Further, since the projecting surface of the reflecting prism 29 slightly tilts with respect to the distance measuring optical axis 25 deflected by the beam splitter film 38, it is possible to prevent the distance measuring light 32 internally reflected on the projecting surface is received by the photodetector 36, which reduces measurement errors.

Further, since the receiving prism 42 is provided and the reflected distance measuring light 45 is internally reflected in the receiving prism 42 more than once, it is possible to be shorten an optical path length in a direction of the axis 11a (a left-and-right direction with respect to a plane of paper), downsize an optical system of the distance measuring unit 19, and reduce a weight of the surveying instrument 1.

Next, by referring to FIG.4, a description will be given on a second embodiment of the present invention. It is to be noted that, in FIG.4, the same components as shown in FIG.2A are referred by the same symbols, and detailed description thereof will be omitted.

In the second embodiment, by being deflected a distance measuring optical axis 25 twice, the distance measuring optical axis 25 is configured to coincide with a light receiving optical axis 37 and an axis 11a. That is, in the second embodiment, a reflecting mirror 52 which deflects (reflects) the distance measuring optical axis 25 at a right angle is provided between a pinhole plate 28 and a reflecting prism 29.

The distance measuring light 32 which has been emitted from a light emitter 26 and passed through a pinhole 33 is deflected at a right angle by the reflecting mirror 52 and then perpendicularly enters with respect to a reflecting prism 29. That is, the distance measuring light 32 enters with respect to an incidence surface of the reflecting prism 29 perpendicularly. Processes after incidence upon the reflecting prism 29 are the same as the processes in the first embodiment.

In the second embodiment, since the reflecting mirror 52 which deflects the distance measuring optical axis 25 at a right angle is provided, it is possible to be shorten an optical path length in a direction of an axis 6a (an up-and-down direction with respect to a plane of paper, see FIG.1) and downsize an optical system of a distance measuring unit 19.

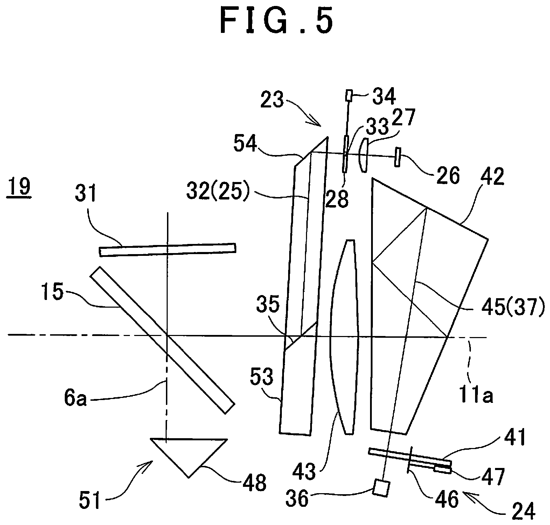

Next, by referring to FIG.5, a description will be given on a third embodiment of the present invention. It is to be noted that, in FIG.5, the same components as shown in FIG.2A are referred by the same symbols, and detailed description thereof will be omitted.

The third embodiment, like the second embodiment, is configured to coincide a distance measuring optical axis 25 with a light receiving optical axis 37 and an axis 11a, by deflecting the distance measuring optical axis 25 twice. On the other hand, in the third embodiment, a reflecting prism 53 is a trapezoidal prism with two prisms joined together.

The reflecting prism 53 has a reflecting surface 54, the reflecting surface 54 reflects (deflects) a distance measuring light 32 which entered at a right angle with respect to the reflecting prism 53 toward a joined surface 35. The distance measuring light 32 reflected on the reflecting surface 54 is deflected by a beam splitter film 38 on the joined surface 35 in such a manner that the distance measuring optical axis 25 coincides with a light receiving optical axis 37 and an axis 11a. Processes after incidence upon the beam splitter film 38 are the same as the processes in the first embodiment.

In the third embodiment, the reflecting prism 53 has the reflecting surface 54 which deflects a distance measuring optical axis 25 toward the beam splitter film 38. Therefore, it is possible to be shorten an optical path length in a direction of an axis 6a (an up-and-down direction with respect to a plane of paper, see FIG.1) and downsize an optical system of a distance measuring unit 19.

Further, since the prism is used instead of a mirror as an optical member configured to deflect the distance measuring optical axis 25 toward the beam splitter film 38, it is possible to suppress a deviation of the optical axis (a deflection angle error) based on temperature changes with respect to a surveying instrument main body 3 and improve a measurement accuracy.

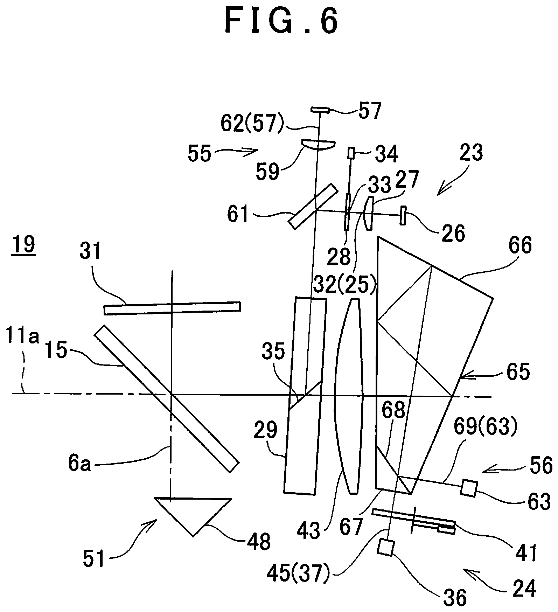

Next, by referring to FIG.6, a description will be given on a fourth embodiment of the present invention. It is to be noted that, in FIG.6, the same components as shown in FIG.2A are referred by the same symbols, and detailed description thereof will be omitted.

The fourth embodiment is a configuration that a tracking function added to the surveying instrument of the first embodiment, and a distance measuring unit 19 has a tracking light projecting module 55 and a tracking light receiving module 56.

The tracking light projecting module 55 has a tracking optical axis 57. Further, the tracking light projecting module 55 has a tracking light emitter 58, a collimator lens 59, a dichroic mirror 61, and a reflecting prism 29 sequentially provided on the tracking optical axis 57 from a light emission side. It is to be noted, in the present embodiment, the tracking optical axis 57 and the tracking optical axis 57 reflected by the reflecting prism 29 are generically referred to as the tracking optical axis 57. Further, a distance measuring light projecting module 23, that is, a light emitter 26, a collimator lens 27, and a pinhole plate 28 are provided on a reflection side of the dichroic mirror 61.

The tracking light emitter 58 is, for instance, a laser diode (LD), and configured to project a tracking light 62 having a near-infrared wavelength different from a wavelength of a distance measuring light 32. Further, the dichroic mirror 61 is configured to transmit through the tracking light 62 and reflect the distance measuring light 32.

That is, the dichroic mirror 61 is provided on a common optical path of the distance measuring light 32 and the tracking light 62 (an intersecting position of a distance measuring optical axis 25 and the tracking optical axis 57), and deflects (reflects) the distance measuring optical axis 25 in such a manner that the distance measuring optical axis 25 coincides with the tracking optical axis 57. Therefore, the distance measuring light 32 and the tracking light 62 are coaxially irradiated toward an object.

The tracking light receiving module 56 has a tracking light receiving optical axis 63. Further, the tracking light receiving module 56 has a tracking photodetector 64, a receiving prism 65, and a light receiving lens 43 sequentially provided on the tracking light receiving optical axis 62 from a light reception side.

The receiving prism 65 has a configuration in which a first prism 66 which is a quadrangular prism having a predetermined refractive index and a second prism 67 which is triangular prism having a predetermined refractive index are joined and integrated with each other. In an integrated state, the receiving prism 65 has the same outer shape as the outer shape of the receiving prism 42 in the first embodiment. A dichroic filter film is provided on a joined surface 68 of the first prism 66 and the second prism 67, and the joined surface 68 is configured to transmit through a reflected distance measuring light 45 and reflect the tracking light 62 (a reflected tracking light 69) reflected on an object. That is, the joined surface 68 is a separating surface for separating the reflected distance measuring light 45 (a light receiving optical axis 37) and the reflected tracking light 69 (the tracking light receiving optical axis 63) from each other. It is to be noted that a first surface, a second surface, and a third surface in the receiving prism 65 have the same configurations as the configurations of the first surface 42a, the second surface 42b, and the third surface 42c of the receiving prism 42 in the first embodiment.

Further, a light amount adjusting plate 41 and a photodetector 36 are provided on a transmission side of the joined surface 68, and the tracking photodetector 64 is provided on a reflection side of the joined surface 68. That is, the joined surface 68 is placed on a common optical path of the reflected distance measuring light 45 and the reflected tracking light 69 (an intersecting position of the light receiving optical axis 37 and the tracking light receiving optical axis 63), and separates the reflected distance measuring light 45 and the reflected tracking light 69 from each other which have coaxially entered the receiving prism 65.

The tracking photodetector 64 is a CCD or a CMOS sensor which is an aggregation of pixels, and a position of each pixel on the tracking photodetector 64 can be identified. For instance, each pixel has pixel coordinates in a coordinate system with the center of the tracking photodetector 64 as an origin, and its position on the tracking photodetector 64 can be identified by the pixel coordinates. Each pixel outputs pixel coordinates together with a light reception signal to the arithmetic control module 17.

When tracking an object, an arithmetic control module 17 irradiates the tracking light 62 coaxially with the distance measuring light 32, calculates an incidence position of the reflected tracking light 69 which reflected by the object with respect to the tracking photodetector 64, and calculates a deviation between the incidence position and the center of the tracking photodetector 64. Based on the deviation, the arithmetic control module 17 controls a horizontal rotation motor 8 and the vertical rotation motor 13 in such a manner that the incidence position of the reflected tracking light 69 coincides with the center of the tracking photodetector 64. Thereby, the surveying instrument main body 3 tracks the object.

In the fourth embodiment, optical components for the distance measurement and optical components for the tracking are partially shared, and the distance measuring light 32 and the tracking light 62 are configured to irradiate the object coaxially. Therefore, even if a tracking function is added to the surveying instrument 1, it is possible to downsize an optical system of the distance measuring unit 19.

It is to be noted that a transmission side of the dichroic mirror 61 may be set as a distance measuring light projecting module 23, and a reflection side of the dichroic mirror 61 may be set as the tracking light projecting module 55. Further, a transmission side of the joined surface 68 may be set as the tracking light receiving module 56, and a reflection side of the joined surface 68 may be set as the distance measuring light receiving module 24.

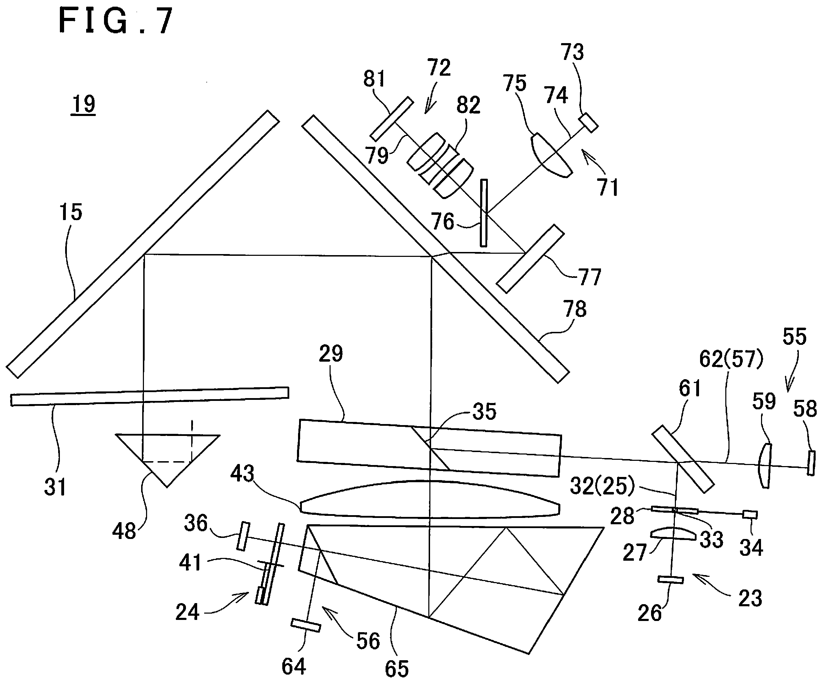

Next, by referring to FIG.7, a description will be given on a fifth embodiment of the present invention. It is to be noted that, in FIG.7, the same components as shown in FIG.6 are referred by the same symbols, and detailed description thereof will be omitted.

In the fifth embodiment, in addition to a distance measuring light projecting module 23, a distance measuring light receiving module 24, a tracking light projecting module 55, and a tracking light receiving module 56 similar to those in the fourth embodiment, a laser pointer light projecting module 71 and an image pickup module 72 are coaxially provided.

The laser pointer projecting module 71 has a laser pointer light emitter 73, a light projecting lens 75 and a beam splitter 76 provided on an optical axis of a laser pointer light projected from the laser pointer light emitter 72 (a laser pointer optical axis 74), a mirror 77 provided on a reflected optical axis of the beam splitter 76, and a short-pass filter plate 78 provided on a reflected optical axis of the mirror 77. It is to be noted, in the present embodiment, the laser pointer optical axis 74, and a laser pointer optical axis 74 reflected by the mirror 77 and the short-pass filter plate 78 are generically referred to as the laser pointer optical axis 74.

The laser pointer light emitter 73 is, for instance, a laser diode which projects a laser beam in a visible light range. The beam splitter 76 deflects the laser pointer optical axis 74 coaxially with an image pickup optical axis 79 (to be described later). That is, the beam splitter 76 is arranged at an intersecting position of the laser pointer optical axis 74 and the image pickup optical axis 79. Further, the mirror 77 reflects the laser pointer optical axis 74 toward the short-pass filter plate 78.

The short-pass filter plate 78 has optical characteristics to transmit through a visible light and reflect a distance measuring light 32 (a reflected distance measuring light 45) and a tracking light 62 (a reflected tracking light 69). Further, the short-pass filter plate 78 deflects a distance measuring optical axis 25 and a tracking optical axis 57 in such a manner that the distance measuring optical axis 25 and the tracking optical axis 57 become coaxial with a laser pointer optical axis 74 transmitted through the short-pass filter plate 78. Further, the short-pass filter plate 78 separates the image pickup optical axis 79 from the light receiving optical axis 37 and a tracking light receiving optical axis 63. That is, the short-pass filter plate 78 is arranged on a common optical path of the distance measuring light 32 (the tracking light 62) and a laser pointer light.

The image pickup module 72 has an image pickup element 81, a light receiving lens group 82, the beam splitter 76, the mirror 77, and the short-pass filter plate 78 provided on an optical axis of a background light received by the image pickup element 81 (the image pickup optical axis 79).

The image pickup element 81 is a CCD or a CMOS sensor which is an aggregation of pixels, and a position of each pixel on the image pickup element 81 can be identified. For instance, each pixel has pixel coordinates in a coordinate system with the center of the image pickup element 81 as an origin, and its position on the image pickup element 81 can be identified by the pixel coordinates. Each pixel outputs pixel coordinates together with a light reception signal to the arithmetic control module 17.

The reflected distance measuring light 45, the reflected tracking light 69, and a reflected laser pointer light which have been coaxially irradiated and coaxially reflected enter the distance measuring unit 19 together with the background light, and each light are separated when the reflected laser pointer light and the background light are transmitted through the short-pass filter plate 78.

Further, the reflected laser pointer light and the background light which have been transmitted through the short-pass filter plate 78 are reflected by the mirror 77, and imaged on the image pickup element 81 via the beam splitter 76 and the light receiving lens group 82, and an image is acquired.

In the fifth embodiment, the laser pointer light projecting module 71, the image pickup module 72, the distance measuring optical axis 25 and the tracking optical axis 57 are provided in such a manner that each module and axis becomes coaxial with each other. Therefore, since it is possible to share some of optical members used in the distance measurement, the tracking, the image pickup, and others, which achieves downsizing an optical system and a reduction in the number of components.

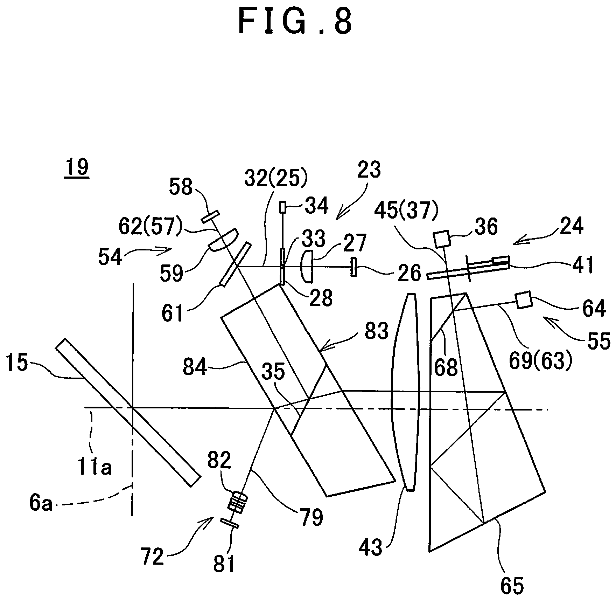

Next, by referring to FIG.8, a description will be given on a sixth embodiment of the present invention. It is to be noted that, in FIG.8, the same components as shown in FIG.6 are referred by the same symbols, and detailed description thereof will be omitted.

In the sixth embodiment, in addition to a distance measuring light projecting module 23, a distance measuring light receiving module 24, a tracking light projecting module 55, and a tracking light receiving module 56, an image pickup module 72 is added.

Further, in the sixth embodiment, a reflecting prism 83 tilts at approximately 35° with respect to an axis 11a, and a long-pass filter surface 84 having a long-pass filter provided is formed on a projecting surface of the reflecting prism 83 (a left surface with respect to a plane of paper). Further, a lower portion of the reflecting prism 83 is formed a chamfered portion.

The long-pass filter surface 84 has optical characteristics to reflect a visible light and transmit through an infrared light and a near-infrared light. That is, the long-pass filter surface 84 is a separating surface which reflects a background light and transmits through a reflected distance measuring light 45 and a reflected tracking light 69 which have entered coaxially.

An optical axis of the background light separated and reflected by the long-pass filter surface 84 is the image pickup optical axis 79, and a light receiving lens group 82 and an image pickup element 81 are provided on the image pickup optical axis 79. Therefore, the background light which has entered the reflecting prism 83 is reflected on the long-pass filter surface 84, and enters the image pickup element 81. The other structures are substantially the same as the structures in the fourth embodiment.

In the sixth embodiment, the long-pass filter surface 84 provided on the projecting surface of the reflecting prism 83 is used as a separating surface by which the background light is separated. Therefore, since a mirror or a prism does not have to be additionally provided in order to separate the background light, which achieves a reduction in the number of components and the downsizing of an optical system.

It is to be noted that, in the present invention, needless to say, the first embodiment to the sixth embodiment may be appropriately combined.
Further, in the first to sixth embodiments, the hole physically drilled in the pinhole plate 28 is determined as the pinhole 33. On the other hand, an opening formed is formed by a mask using an electrowetting or a chrome-deposited on a glass plate may also be determined as the pinhole. By using the electrowetting, since a size of the pinhole can be changed by an applied voltage, the finer light amount adjustment enables performing.

## Claims

1. A surveying instrument comprising: a distance measuring light projecting module (23) configured to project a distance measuring light (32) to an object, a distance measuring light receiving module (24) having a photodetector (36) configured to receive a reflected distance measuring light (45) from said object, and an arithmetic control module (17) configured to control said distance measuring light projecting module and calculate a distance to said object based on a light reception result of said reflected distance measuring light with respect to said photodetector, wherein said distance measuring light projecting module has a pinhole plate (28) which is insertable or removable with respect to an optical axis (25) of said distance measuring light, a pinhole (33) having a predetermined diameter is formed in said pinhole plate, and a light amount and a spread angle of said distance measuring light are changeable based on the insertion or removable of said pinhole plate, **characterized in that** said distance measuring light projecting module (23) has a reflecting prism (29, 53, 83) having two prisms joined together, a beam splitter film (38) having a predetermined reflectance and transmittance is formed on a joined surface (35) of said reflecting prism, and said reflecting prism is configured to deflect said optical axis (25) of said distance measuring light (32) via said beam splitter film so as to coincide with an optical axis (37) of said reflected distance measuring light (45), wherein said reflecting prism is tilted with respect to said optical axis of said reflected distance measuring light, such that said distance measuring light, reflected by the beam splitter film, transmits at a slight tilt through a projecting surface of said reflecting prism.

2. The surveying instrument according to claim 1, wherein a long-pass filter surface (84) configured to transmit through said distance measuring light (32) which is an infrared light or a near-infrared light and reflect a visible light is formed on the projecting surface, and an image pickup module (72) is provided on a reflected optical axis (79) of said long-pass filter surface.

## Patentansprüche

1. Vermessungsinstrument, umfassend: ein Entfernungsmesslichtprojektionsmodul (23), das konfiguriert ist, ein Entfernungsmesslicht (32) auf ein Objekt zu projizieren, ein Entfernungsmesslichtempfangsmodul (24) mit einem Photodetektor (36), der konfiguriert ist, ein von dem Objekt reflektiertes Entfernungsmesslicht (45) zu empfangen, und ein arithmetisches Steuermodul (17), das konfiguriert ist, das Entfernungsmesslichtprojektionsmodul zu steuern und eine Entfernung zu dem Objekt auf Grundlage eines Lichtempfangsergebnisses des reflektierten Entfernungsmesslichts in Bezug auf den Photodetektor zu berechnen, wobei das Entfernungsmesslichtprojektionsmodul eine Lochblendenplatte (28) aufweist, die in Bezug auf eine optische Achse (25) des Entfernungsmesslichts einsetzbar oder entnehmbar ist, eine Lochblende (33) mit einem vorbestimmten Durchmesser in der Lochblendenplatte ausgebildet ist, und eine Lichtmenge und ein Streuwinkel des Entfernungsmesslichts auf Grundlage des Einsetzens oder Entfernens der Lochblendenplatte veränderbar sind, **dadurch gekennzeichnet, dass** das Entfernungsmesslichtprojektionsmodul (23) ein reflektierendes Prisma (29, 53, 83) mit zwei miteinander verbundenen Prismen aufweist, ein Strahlteilerfilm (38) mit einem vorbestimmten Reflexionsgrad und Transmissionsgrad auf einer gemeinsamen Oberfläche (35) des reflektierenden Prismas ausgebildet ist, und das reflektierende Prisma konfiguriert ist, die optische Achse (25) des Entfernungsmesslichts (32) über den Strahlteilerfilm so abzulenken, dass sie mit einer optischen Achse (37) des reflektierten Entfernungsmesslichts (45) zusammenfällt, wobei das reflektierende Prisma in Bezug auf die optische Achse des reflektierten Entfernungsmesslichts geneigt ist, sodass das Entfernungsmesslicht, das von dem Strahlteilerfilm reflektiert wird, mit einer leichten Neigung durch eine Projektionsfläche des reflektierenden Prismas hindurchtritt.

2. Vermessungsinstrument nach Anspruch 1, wobei eine Langpassfilterfläche (84), die konfiguriert ist, das Entfernungsmesslicht (32), das ein Infrarotlicht oder ein Nahinfrarotlicht ist, durchzulassen und sichtbares Licht reflektiert, auf der Projektionsfläche ausgebildet ist und ein Bildaufnahmemodul (72) auf einer reflektierten optischen Achse (79) der Langpassfilterfläche vorgesehen ist.

## Revendications

1. Instrument d'arpentage comprenant un module de projection de lumière de mesure de distance (23) configuré pour projeter une lumière de mesure de distance (32) vers un objet, un module de réception de lumière de mesure de distance (24) ayant un photodétecteur (36) configuré pour recevoir une lumière de mesure de distance réfléchie (45) par ledit objet, et un module de commande arithmétique (17) configuré pour commander ledit module de projection de lumière de mesure de distance et calculer une distance à cet objet sur la base d'un résultat de réception de lumière de mesure de distance réfléchie par rapport audit photodétecteur, dans lequel ledit module de projection de lumière de mesure de distance comporte une plaque à sténopé (28) qui est insérable ou amovible par rapport à un axe optique (25) de ladite lumière de mesure de distance, un sténopé (33) d'un diamètre prédéterminé étant formé dans ladite plaque à sténopé, et une quantité de lumière et un angle d'étalement de ladite lumière de mesure de distance sont modifiables en fonction de l'insertion ou du retrait de ladite plaque à sténopé, **caractérisé en ce que** ledit module de projection de lumière de mesure de distance (23) comporte un prisme réfléchissant (29, 53, 83) ayant deux prismes joints ensemble, un film séparateur de faisceau (38) ayant une réflectance et une transmittance prédéterminées est formé sur une surface jointe (35) dudit prisme réfléchissant, et ledit prisme réfléchissant est configuré pour dévier ledit axe optique (25) de ladite lumière de mesure de distance (32) via ledit film séparateur de faisceau de manière à coïncider avec un axe optique (37) de ladite lumière de mesure de distance réfléchie (45), dans lequel ledit prisme réfléchissant est incliné par rapport audit axe optique de ladite lumière de mesure de distance réfléchie, de sorte que ladite lumière de mesure de distance, réfléchie par le film séparateur de faisceau, se transmet avec une légère inclinaison à travers une surface de projection dudit prisme réfléchissant.

2. L'instrument d'arpentage selon la revendication 1, dans lequel une surface de filtre à long passage (84) configurée pour transmettre à travers ladite lumière de mesure de distance (32) qui est une lumière infrarouge ou une lumière proche de l'infrarouge et réfléchir une lumière visible est formée sur la surface de projection et un module de capture d'image (72) est fourni sur un axe optique réfléchi (79) de ladite surface de filtre à long passage.
